# EUROPEAN PATENT APPLICATION

(11) **EP 2 919 130 A1**
(43) Date of publication of application: **16.09.2015**
(21) Application number: 13868638.1
(22) Date of filing: 06.08.2013
(51) Int. Cl.: G06F 17/30

(54) **METHOD AND SYSTEM FOR SYNCHRONIZING DISTRIBUTED DATABASE**

(30) Priority: 28.12.2012 CN 201210586458
(71) Applicant: Huawei Technologies Co., Ltd., Longgang District Shenzhen, Guangdong 518129 (CN)
(72) Inventor: ZHU, Junhua, Shenzhen Guangdong 518129 (CN)
(74) Representative: Epping - Hermann - Fischer
(86) International application number: PCT/CN2013/080866
(87) International publication number: WO 2014/101424

(57) **Abstract**

The present invention discloses a distributed database synchronization method and system. A distributed database includes a master server cluster and a backup server cluster, where the master server cluster includes a first master node and a second master node, and the backup server cluster includes a first backup node and a second backup node. The method includes: generating a hash tree of the master server cluster and a hash tree of the backup server cluster; determining a range hash tree of the second master node and a range hash tree of the second backup node that have inconsistent range hash values; determining a data unit to be synchronized in the second master node and a data unit to be synchronized in the second backup node; and performing data synchronization. In the present invention, because data units to be synchronized can be determined separately in each node, it can be achieved that data units to be synchronized are determined separately and simultaneously in multiple nodes, thereby saving time required for data consistency check, and further improving efficiency of data synchronization.

## Description

### TECHNICAL FIELD

The present invention relates to the field of databases, and in particular, to a distributed database synchronization method and system.

### BACKGROUND

With the rise of cloud computing, requirements for massive data storage and management increase unceasingly. Under such a trend, many large-scale distributed databases oriented to massive data management have appeared in recent years, which provide massive data storage and management capabilities by constructing large-scale server clusters using commercial hardware.

As one of the key technologies to ensure reliability and availability of a database service, a replication mechanism is widely used in various emerging large-scale distributed database systems. In an actual application, an asynchronous replication manner is generally used between data centers, which ensures only eventual consistency of data replicas, that is, ensures reliability and availability of data in a manner of synchronizing data of a slave database with data of a master database. To ensure effectiveness of synchronization of the master database and the slave database, it is required that inconsistent data replicas can be checked and synchronized in various failure scenarios, so as to ensure that, after a failure occurs in a database, the database can be restored to a correct state before the failure, thereby improving availability and reliability of the database.

In the prior art, a technical solution used is generally as follows: An entire database synchronization system includes a master database, a slave database, and a synchronization unit, where the master database and the slave database both include a data formatting unit, a hash value generator, and a tree structure generator.

The data formatting unit is responsible for receiving, formatting, storing, and managing a data unit according to a common data model. A hash model defines one or more hash algorithms and their input formats, and the hash value generator generates a hash value for the data unit according to the hash model. The tree structure generator organizes data units in the data formatting unit into a tree. After the tree structure generator generates a tree, the hash value generator calculates a hash value of each node in the tree, so as to obtain a hash tree. If the node is a leaf node, a node hash value is obtained by calculating a hash value of a data unit included in the node; and if the node is not a leaf node, a node hash value is obtained by calculating a hash value of a subnode of the node and a hash value of a data unit included in the node.

The synchronization unit determines an inconsistent data unit by comparing a hash tree of the master database with a hash tree of the slave database, and the synchronization unit instructs the master database to transfer the inconsistent data unit from the master database to the slave database; and after all hash trees are compared and all inconsistent data units have been transferred, synchronization of databases is completed.

The inventor finds through research that the technical solution in the prior art at least has the following defect:

In the prior art, comparison of hash trees of data units in all nodes needs to be performed in a synchronization unit; as a result, it needs to take a long time to perform data consistency check, which results in low efficiency of data synchronization.

### SUMMARY

In view of this, the present invention provides a distributed database synchronization method and system, so as to solve a problem of low efficiency of data synchronization in the prior art.

The present invention is implemented as follows:

According to one aspect, a distributed database synchronization method is provided, where a distributed database includes a master server cluster and a backup server cluster, a master node in the master server cluster includes one or more ranges, a backup node in the backup server cluster includes one or more ranges, each range in the master server cluster corresponds to one range in the backup server cluster, the master server cluster includes a first master node and a second master node, and the backup server cluster includes a first backup node and a second backup node, and the method includes:
acquiring, by the first master node, range hash values of root nodes of all range hash trees of each master node in the master server cluster, and generating a hash tree of the master server cluster that uses the range hash values in the master server cluster as leaf nodes, where the range hash tree of the master node is a hash tree that is constructed by the master node by using a data unit in a range as a leaf node;
acquiring, by the first backup node, range hash values of root nodes of all range hash trees of each backup node in the backup server cluster, and generating a hash tree of the backup server cluster that uses the range hash values in the backup server cluster as leaf nodes, where the range hash tree of the backup node is a hash tree that is constructed by the backup node by using a data unit in a range as a leaf node;
determining, by the first master node by comparing the hash tree of the master server cluster with the hash tree of the backup server cluster, a range hash tree of the second master node and a range hash tree of the second backup node that have inconsistent range hash values;
determining, by the second master node by comparing the range hash tree of the second master node with the range hash tree of the second backup node, a data unit to be synchronized in the second master node and a data unit to be synchronized in the second backup node; and
performing, by the second master node, data synchronization according to the data unit to be synchronized in the second master node and the data unit to be synchronized in the second backup node.
Further, the hash tree that is constructed by using a data unit in a range as a leaf node specifically includes:
constructing, according to data unit information and range information, a tree structure that uses a data unit as a leaf node for each range;
calculating a hash value of each leaf node of the tree structure according to a hash model, to generate the range hash tree; and
adding a corresponding range identifier to each range hash tree.

Further, each range in the master server cluster corresponding to a range in a backup server specifically includes:
separately setting a range identifier for each range in the master server cluster and each range in the backup server; and
associating the range identifier of each range in the master server cluster with the range identifier of a corresponding range in the backup server.

Further, the first master node is elected from multiple master nodes; and the first backup node is elected from multiple backup nodes.

According to another aspect, this application further provides a distributed database synchronization system, where the distributed database synchronization system includes a master server cluster and a backup server cluster, a master node in the master server cluster includes one or more ranges, a backup node in the backup server cluster includes one or more ranges, each range in the master server cluster corresponds to one range in the backup server cluster, the master server cluster includes a first master node and a second master node, and the backup server cluster includes a first backup node and a second backup node, where:
the first master node includes a master server cluster hash tree generating unit, configured to acquire range hash values of root nodes of all range hash trees of each master node in the master server cluster, and generate a hash tree of the master server cluster that uses the range hash values in the master server cluster as leaf nodes, where the range hash tree of the master node is a hash tree that is constructed by the master node by using a data unit in a range as a leaf node;
the first backup node includes a backup server cluster hash tree generating unit, configured to acquire range hash values of root nodes of all range hash trees of each backup node in the backup server cluster, and generate a hash tree of the backup server cluster that uses the range hash values in the backup server cluster as leaf nodes, where the range hash tree of the backup node is a hash tree that is constructed by the backup node by using a data unit in a range as a leaf node;
the first master node includes a range determining unit, configured to determine, by comparing the hash tree of the master server cluster with the hash tree of the backup server cluster, a range hash tree of the second master node and a range hash tree of the second backup node that have inconsistent range hash values;
the second master node includes a data determining unit, configured to determine, by comparing the range hash tree of the second master node with the range hash tree of the second backup node, a data unit to be synchronized in the second master node and a data unit to be synchronized in the second backup node; and
the second master node includes a synchronization unit, configured to perform data synchronization according to the data unit to be synchronized in the second master node and the data unit to be synchronized in the second backup node.

Further, the master server cluster hash tree generating unit and the backup server cluster hash tree generating unit both include a range hash tree generating module, where the range hash tree generating module includes:
a tree generator, configured to construct, according to data unit information of a data management unit and range information of a range management unit, a tree structure that uses a data unit as a leaf node for each range;
a hash value generator, configured to calculate a hash value of each leaf node of the tree structure according to a hash model, to generate the range hash tree; and
a range identification unit, configured to add a range identifier to each range hash tree.

Further, the master server cluster and the backup server cluster both include:
an election unit, configured to determine the first master node from the multiple master nodes, or determine the first backup node from the multiple backup nodes.

As can be learned from the foregoing description, in the present invention, a master coordinating node and a slave coordinating node are configured, and a hash tree of a master server cluster and a hash tree of a backup server cluster that use range hash values as leaf nodes are generated by the master coordinating node and the slave coordinating node, respectively, so that master ranges to be synchronized and backup ranges to be synchronized, and master nodes to be synchronized and backup nodes to be synchronized that respectively correspond to the master ranges to be synchronized and the backup ranges to be synchronized can be preliminarily determined; subsequently, it can be determined, by comparing range hash trees of the master nodes to be synchronized with range hash trees of the backup nodes to be synchronized, that corresponding data units that have inconsistent hash values are master data units to be synchronized and backup data units to be synchronized. In the present invention, because the master data units to be synchronized and the backup data units to be synchronized can be determined separately in each node, it can be achieved that data units to be synchronized are determined separately and simultaneously in multiple nodes, thereby saving time required for data consistency check, and further improving efficiency of data synchronization.

### BRIEF DESCRIPTION OF DRAWINGS

To describe the technical solutions in the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a hierarchical structure of a distributed database synchronization system according to the present invention;
FIG. 2 is a schematic flowchart of a distributed database synchronization method according to an embodiment of the present invention;
FIG. 3 is a schematic structural diagram of a distributed database synchronization system according to the present invention; and
FIG. 4 is a schematic structural diagram of a node in a server cluster according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

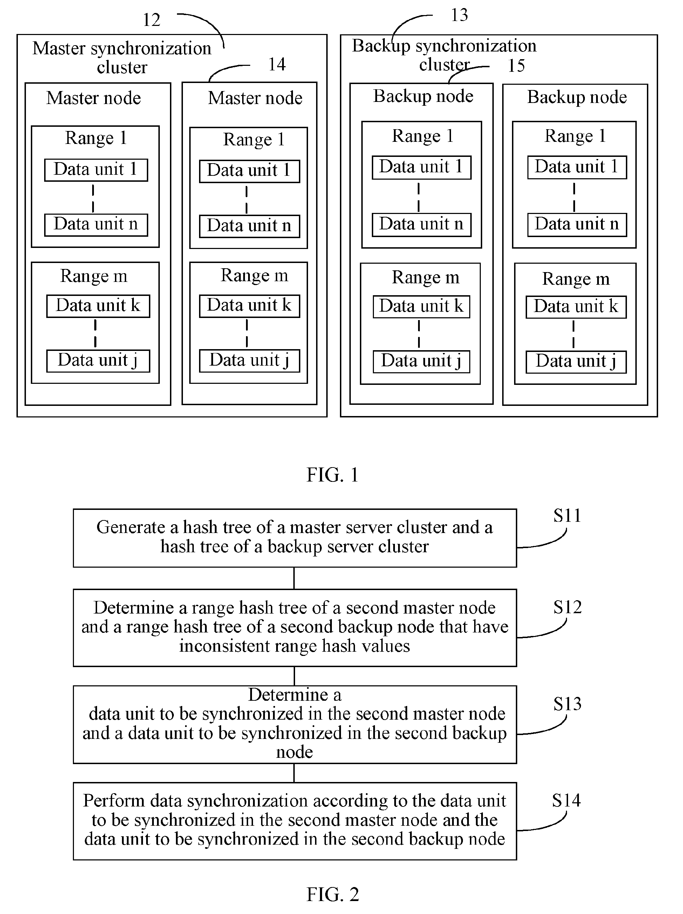

To solve the problem of low efficiency of data synchronization in the prior art, a distributed database synchronization method is provided in this embodiment. FIG. 1 illustrates a hierarchical structure of a distributed database synchronization system in the present invention. A distributed database includes a master server cluster 12 and a backup server cluster 13, a master node 14 in the master server cluster 12 includes one or more ranges, a backup node 15 in the backup server cluster 13 includes one or more ranges, each range in the master server cluster 12 corresponds to one range in the backup server cluster 13, and each range in the master node and the backup node includes one or more data units.

FIG. 2 illustrates a distributed database synchronization method according to an embodiment of the present invention, where a master server cluster 12 includes a first master node and a second master node, and a backup server cluster 13 includes a first backup node and a second backup node. The distributed database synchronization method includes:
S 11. Generate a hash tree of the master server cluster and a hash tree of the backup server cluster.

The first master node acquires range hash values of root nodes of all range hash trees of each master node in the master server cluster, and generates a hash tree of the master server cluster that uses the range hash values in the master server cluster as leaf nodes, where the range hash tree of the master node is a hash tree that is constructed by the master node by using a data unit in a range as a leaf node.

The first backup node acquires range hash values of root nodes of all range hash trees of each backup node in the backup server cluster, and generates a hash tree of the backup server cluster that uses the range hash values in the backup server cluster as leaf nodes, where the range hash tree of the backup node is a hash tree that is constructed by the backup node by using a data unit in a range as a leaf node.

A database server cluster in the present invention includes multiple nodes to store data. First, the nodes are classified into two types, that is, master nodes and backup nodes, according to different storage functions of the nodes; in an actual application, multiple master nodes may be generally referred to as a master server cluster, multiple backup nodes are generally referred to as a backup server cluster, and the backup server cluster is configured to back up data in the master server cluster.

The functions included in both the master node and the backup node are specifically: managing, storing, and formatting data units; arranging data units according to ranges, and recording range information, which may specifically include maintaining, by using a data management unit, range information of a range that includes multiple data units.

In the present invention, functions included by both the master node and the backup node are specifically: storing, formatting, and managing data by using the data management unit; a data unit in the present invention is a minimum unit for data organization in a distributed database, the data management unit may include multiple data units, and each data unit may be differentiated and identified by a data unit identifier of the data unit. Specifically, the data management unit may format to-be-stored data into multiple data units by using a set data model.

In the present invention, in the data management unit, multiple data units are organized into a range, and range information of the range that includes the multiple data units is maintained by using a range management unit. In other words, in each data management unit, multiple ranges may be included; a range is a minimum unit for data management by the distributed database. Each range may be differentiated and identified by using a range identifier of the range.

In the present invention, in a distributed database based on the foregoing hierarchical structure, the provided distributed database synchronization method first acquires, by using a first master node, range hash values of root nodes of all range hash trees of each master node in a master server cluster, and generates a hash tree of the master server cluster that uses the range hash values in the master server cluster as leaf nodes, where the range hash tree of the master node is a hash tree that is constructed by the master node by using a data unit in a range as a leaf node.

The first backup node acquires range hash values of root nodes of all range hash trees of each backup node in the backup server cluster, and generates a hash tree of the backup server cluster that uses the range hash values in the backup server cluster as leaf nodes, where the range hash tree of the backup node is a hash tree that is constructed by the backup node by using a data unit in a range as a leaf node.

A manner of generating a range hash tree of the master node is similar to that of the backup node, which may specifically be: generating, for each range according to data unit information in the data management unit and range information in the range management unit by using a hash model, a range hash tree that uses hash values of data units as leaf nodes and includes a range identifier.

Each range in the master server cluster corresponds to a range in a backup server. In the present invention, according to the nature of nodes to which the ranges belong, the ranges may be classified into two types, namely, master partitions and backup partitions, that is, a partition included in the master node may be referred to as a master partition, and a partition in the backup node may be referred to as a backup partition. Master partitions and backup partitions are in a one-to-one correspondence, that is, master range 1 in the master server cluster corresponds to backup partition 1 in the backup server cluster, master range 2 in the master server cluster corresponds to backup partition 2 in the backup server cluster, and so on, where the backup partition backs up data in the master partition through synchronization with the master partition.

In addition, the master partitions and the backup partitions may further be made to be in a one-to-one correspondence by setting range identifiers for the master partitions and the backup partitions respectively and associating corresponding master partitions and backup partitions by using the range identifiers.

In the present invention, the master node and the backup node may further generate, for each range according to data unit information in the data management unit and range information in the range management unit by using a hash model, a range hash tree that uses a hash value of a data unit as a leaf node.

Specifically, the foregoing functions may be performed in the following manner:

A tree structure that uses a data unit as a leaf node is constructed according to the data unit information of the data management unit and the range information of the range management unit; in an actual application, a tree structure that uses a data unit as a leaf node may be constructed for each range by using a tree generator.

A hash value of each leaf node of the tree structure is calculated according to the hash model, so as to generate the range hash tree.

In an actual application, a range hash tree may be generated according to a tree structure by using a hash value generator. In this way, by generating a corresponding range hash tree for each range, it may be determined, by comparing a range hash tree of a range in a master node with a hash tree of a corresponding range in a corresponding backup node by establishing the range hash tree, whether there are data units to be synchronized.

After acquiring the range hash values of the root nodes of all the range hash trees of each master node in the master server cluster, the first master node uses the range hash value of each master node as a leaf node, to generate the hash tree of the master server cluster.

Similarly, after acquiring the range hash values of the root nodes of all the range hash trees of each backup node in the backup server cluster, the first backup node uses the range hash value of each backup node as a leaf node, to generate the hash tree of the backup server cluster.

In the present invention, the first master node or the first backup node may be determined by using an election mechanism. That is, the first master node may be elected from multiple master nodes; similarly, the first backup node may also be elected from multiple backup nodes.

S12. Determine a range hash tree of the second master node and a range hash tree of the second backup node that have inconsistent range hash values.

The first master node determines, by comparing the hash tree of the master server cluster with the hash tree of the backup server cluster, a range hash tree of the second master node and a range hash tree of the second backup node that have inconsistent range hash values. When data consistency check is performed, that is, when it is checked whether data of the backup server cluster and data of the master server cluster are consistent, first the hash tree of the master server cluster is compared with the hash tree of the backup server cluster to check whether they are consistent; and if yes, it indicates that the data of the master server cluster and the data of the backup server cluster are consistent, and synchronous update is not required; or if not, it indicates that at least one of the ranges in the master server cluster needs to be synchronously updated with at least one of the ranges in the backup server cluster. Specifically, in the present invention, a master node that has an inconsistent range hash value may be referred to as a second master node, and a backup node that has an inconsistent range hash value may be referred to as a second backup node.

In the present invention, when a hash tree of a master server cluster is compared with a backup server cluster and inconsistency is found, it is determined that corresponding ranges causing the inconsistency are a master range to be synchronized and a backup range to be synchronized, that is, a second master node and a second backup node. Further, range identifiers of the master ranges to be synchronized and those of the backup ranges to be synchronized may further be notified to corresponding master nodes and corresponding backup nodes, respectively, where the master nodes are master nodes to be synchronized, and the backup nodes are backup nodes to be synchronized.

Further, in the present invention, a specific manner of notifying master nodes to be synchronized and backup nodes to be synchronized that correspond to the ranges to be synchronized may be: respectively acquiring triplet data that includes range identifiers of ranges corresponding to the master ranges to be synchronized and those of ranges corresponding to the backup ranges to be synchronized, and node identifier information of the master nodes and the backup nodes, and respectively sending the triplet data to the corresponding master nodes and the corresponding backup nodes. The triplet data includes range identifiers of the ranges and node identifiers of the master nodes and the backup nodes that correspond to the range identifiers, so that it may be achieved that the corresponding master nodes and the corresponding backup nodes are notified.

S 13. Determine a data unit to be synchronized in the second master node and a data unit to be synchronized in the second backup node.

The second master node determines, by comparing the range hash tree of the second master node with the range hash tree of the second backup node, a data unit to be synchronized in the second master node and a data unit to be synchronized in the second backup node.

In the present invention, because the range hash value of each range is further calculated, when at least one of corresponding ranges in the master node needs to be synchronously updated with at least one of corresponding ranges in the backup node, it may be determined, by comparing the range hash tree of the second master node with that in the second backup node, that corresponding data units that have inconsistent hash values are master data units to be synchronized and backup data units to be synchronized, thereby determining data units that need to be synchronously updated. In the present invention, there may be multiple nodes that need to be synchronized, and therefore, there may also be multiple second master nodes and multiple second backup nodes.

In the present invention, when data consistency check is performed, multiple second master nodes may be separately compared by comparing a range hash tree of a second master range with a range hash tree of a corresponding second backup range in the second backup node, so that it can be achieved that multiple nodes run synchronously. The present invention can effectively use a network bandwidth and computing resources between nodes, thereby saving time required for performing data consistency check and data synchronization, and further effectively improving efficiency of data synchronization.

Specifically, while data consistency check is performed on master node 1 and backup node 1, data consistency check may be performed on master node 2 and backup node 2 at the same time, and so on, so that synchronous check of data consistency of multiple master nodes and multiple backup nodes may be implemented.

S 14. The second master node performs data synchronization according to the data units to be synchronized in the second master node and the data units to be synchronized in the second backup node.

In the present invention, data synchronization of data units to be synchronized between a corresponding second master node and a corresponding second backup node may specifically be performed by the second master node. In other words, in the present invention, a synchronization unit may be configured in each master node, and in this way, when a master unit is a second master node, synchronous update of data units may be performed by using the synchronization unit of the master node. Because there are multiple synchronization units in the present invention, in a distributed environment, when a single-point failure occurs, for example, when a synchronization unit fails, normal running of an entire database synchronization system is not affected, thereby improving robustness of the distributed database synchronization system.

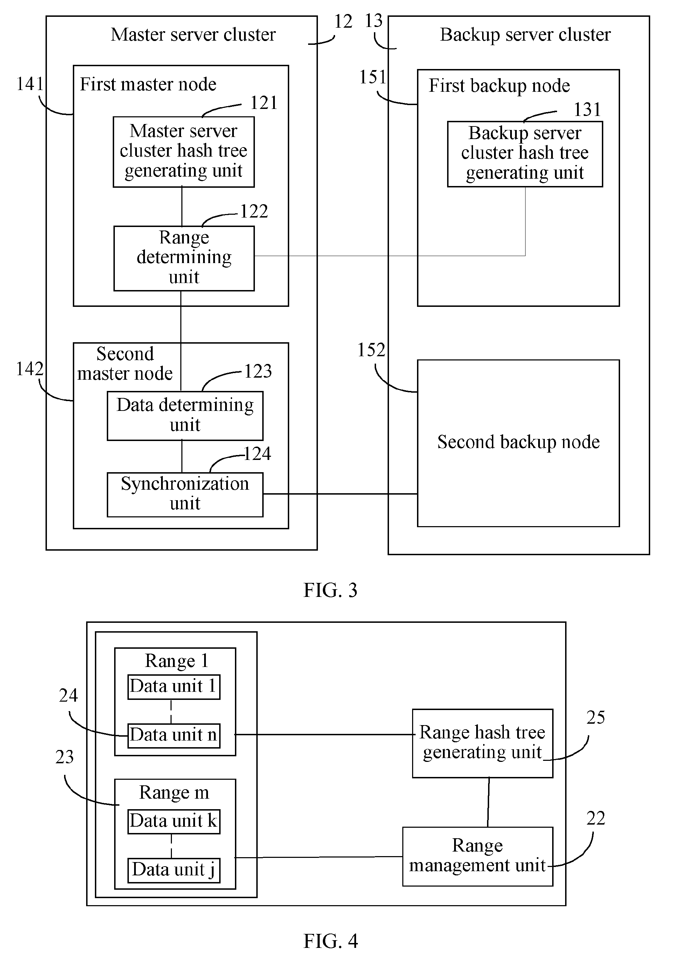

FIG. 3 illustrates a structure of a distributed database synchronization system according to the present invention. The distributed database synchronization system includes a master server cluster 12 and a backup server cluster 13, the master server cluster 12 includes a first master node 141 and a second master node 142, and the backup server cluster 13 includes a first backup node 151 and a second backup node 152.

The first master node 141 includes a master server cluster hash tree generating unit 121, configured to acquire range hash values of root nodes of all range hash trees of each master node in the master server cluster, and generate a hash tree of the master server cluster that uses the range hash values in the master server cluster as leaf nodes, where the first node may be determined from multiple master nodes.

The first backup node 151 includes a backup server cluster hash tree generating unit 131, configured to acquire range hash values of root nodes of all range hash trees of each backup node in the backup server cluster, and generate a hash tree of the backup server cluster that uses the range hash values in the backup server cluster as leaf nodes, where the first backup node may be determined from multiple backup nodes.

Further, in the present invention, the first master node 141 or the first backup node 151 may be specifically determined by using an election mechanism. That is, by using the election mechanism, the first master node is determined from the multiple master nodes, or the first backup node is determined from the multiple backup nodes.

The first master node 141 includes a range determining unit 122, configured to determine, by comparing the hash tree of the master server cluster with the hash tree of the backup server cluster, that two corresponding ranges that have inconsistent range hash values are a master range to be synchronized and a backup range to be synchronized.

Further, the second master node 142 corresponding to the master ranges to be synchronized, that is, master nodes to be synchronized, and the second backup node 152 corresponding to the backup ranges to be synchronized, that is, backup nodes to be synchronized may further be notified. When there are multiple master ranges to be synchronized and multiple backup ranges to be synchronized, and the master ranges to be synchronized and the backup ranges to be synchronized are respectively located in multiple second master nodes and multiple second backup nodes, there are multiple second master nodes and multiple second backup nodes.

When data consistency check is performed, that is, when it is checked whether data of the master server cluster 12 and data of the backup server cluster 13 are consistent, the range determining unit 122 first compares the hash tree of the master server cluster with the hash tree of the backup server cluster to check whether they are consistent; and if yes, it indicates that the data of the master server cluster 12 and the data of the backup server cluster 13 are consistent, and synchronous update is not required; or if not, it indicates that at least one of the ranges in the master server cluster 12 needs to be synchronously updated with at least one of the ranges in the backup server cluster 13.

Further, in the present invention, when a hash tree of the master server cluster is compared with a backup server cluster and inconsistency is found, the range determining unit 122 further respectively notifies range identifiers of corresponding ranges that are inconsistent to the corresponding second master node 142 and the corresponding second backup node 152, where the second master node 142 is a master node to be synchronized, the second backup node 152 is a backup node to be synchronized, and a range corresponding to the second master node 142 and a range corresponding to the second backup node 152 are the master ranges to be synchronized and the backup ranges to be synchronized, respectively.

For a manner how a first master node notifies nodes to be synchronized, in the present invention, the range determining unit 122 may further include a triplet data processing component. When range hash values are inconsistent, the range determining unit 122 respectively acquires triplet data that includes range identifiers of ranges to be synchronized, node identifier information of a master node 14 and that of a backup node 15, and sends the triplet data to a master node and a backup node that respectively correspond to master ranges to be synchronized and backup ranges to be synchronized, so as to notify master nodes to be synchronized and backup nodes to be synchronized.

The second master node 142 includes a data determining unit 123, configured to determine, by comparing range hash trees of the master ranges to be synchronized with range hash trees of the backup ranges to be synchronized, that corresponding data units that have inconsistent hash values are master data units to be synchronized and backup data units to be synchronized.

The second master node 142 includes a synchronization unit 124, configured to perform data synchronization of the master ranges to be synchronized and the backup ranges to be synchronized between corresponding master nodes to be synchronized and corresponding backup nodes to be synchronized.

In the present invention, a range hash tree of each range is further calculated, so that when at least one of corresponding ranges in a master node needs to be synchronously updated with at least one of corresponding ranges in a backup node, the data determining unit 123 determines, by comparing range hash trees of the master ranges to be synchronized with those of the backup ranges to be synchronized, corresponding data units that have inconsistent hash values are data units to be synchronized, and in this way, master data units to be synchronized and backup data units to be synchronized can be determined. Therefore, data synchronization of master ranges to be synchronized and backup ranges to be synchronized between corresponding master nodes to be synchronized and corresponding backup nodes to be synchronized can be performed by the synchronization unit 124.

In the present invention, when data consistency check is performed, the master node directly compares a range hash tree of master ranges to be synchronized of the master node with a range hash tree of backup ranges to be synchronized in the backup node, so that it can be achieved that multiple nodes run synchronously. The present invention can effectively use a network bandwidth and computing resources between nodes, thereby saving time required for performing data consistency check and data synchronization, and further effectively improving efficiency of data synchronization.

In the present invention, a synchronization unit may be configured in a master node, and therefore, data synchronization of data units to be synchronized between corresponding master nodes to be synchronized and corresponding backup nodes to be synchronized may specifically be performed by a second master node, and there may be multiple second master nodes and multiple second backup nodes. In the present invention, a synchronization unit may be configured in each second master node, and in this way, when multiple second master nodes are all master nodes to be synchronized, synchronous update of data units may be performed by using multiple synchronization units. Because there are multiple synchronization units in the present invention, in a distributed environment, when a single-point failure occurs, for example, when a certain synchronization unit fails, normal running of the entire database synchronization system is not affected, thereby improving robustness of the distributed database synchronization system.

For a master node in a master server cluster and a backup node in a backup server cluster, FIG. 4 illustrates a structure of a node in a server cluster according to the present invention, including a structure of the master node in the master server cluster and that of the backup node in the backup server cluster. A structure of a master node 14 and that of a backup node 15 include: a range management unit 22, configured to arrange data units 24 according to ranges 23, and record range information; and a range hash tree generating unit 25, configured to generate, for each range according to data unit information and range information by using a hash model, a range hash tree that uses hash values of data units as leaf nodes and includes a range identifier, where the ranges 23 are classified into master partitions and backup partitions according to nodes to which the ranges belong, and the master partitions and the backup partitions are in a one-to-one correspondence; in other words, each range in the master server cluster corresponds to a range in a backup server.

In the present invention, the data unit 24 is a minimum unit for data organization in a distributed database, each range 23 may include multiple data units 24, and each data unit may be differentiated and identified by using a data unit identifier of the data unit. Specifically, to-be-stored data may be formatted into multiple data units by using a set data model.

Range information of the range 23 that includes the multiple data units 24 is maintained by using the range management unit 22. In other words, in each node, multiple ranges 23 may be included; and the range 23 is a minimum unit for data management by the distributed database. Each range may be differentiated and identified by using a range identifier of the range.

According to the nature of nodes to which the ranges 23 belong, the ranges 23 may be classified into two types, that is, master partitions and backup partitions, that is, a partition included in the master node may be referred to as a master partition, and a partition in the backup node may be referred to as a backup partition. The master partitions and the backup partitions are in a one-to-one correspondence, that is, master range 1 in the master server cluster corresponds to backup partition 1 in the backup server cluster, master range 2 in the master server cluster corresponds to backup partition 2 in the backup server cluster, and so on, where the backup partition backs up data in the master partition by synchronizing with the master partition.

In addition, the master partitions and the backup partitions may further be made to be in a one-to-one correspondence by respectively setting range identifiers for the master partitions and the backup partitions and associating the corresponding master partitions and backup partitions by using the range identifiers.

In the present invention, the master node and backup node further include a range hash tree generating unit 25, and the range hash tree generating unit 25 generates, for each range according to data unit information and range information in the range management unit 22 by using a hash model, a range hash tree that uses a hash value of a data unit as a leaf node.

Specifically, the foregoing functions may be performed in the following manner:

A tree structure that uses a data unit 24 as a leaf node is constructed according to data unit information and range information of the range management unit 22; in an actual application, a tree structure that uses a data unit as a leaf node may be constructed for each range by using a tree generator.

A hash value of each leaf node of the tree structure is calculated according to a hash model, so as to generate the range hash tree.

In an actual application, a range hash tree may be generated according to a tree structure by using a hash value generator. In this way, by generating a corresponding range hash tree for each range, it may be determined, by comparing a range hash tree of a range in a master node with a hash tree of a corresponding range in a corresponding backup node by establishing the range hash tree, whether there are data units to be synchronized.

Further, in the present invention, the range hash tree generating unit 25 may specifically include: a tree generator, configured to construct, according to data unit information and range information of a range management unit, a tree structure that uses a data unit as a leaf node; and a hash value generator, configured to calculate a hash value of each leaf node of the tree structure according to a hash model, to generate the range hash tree.

The embodiments in this specification are all described in a progressive manner, for same or similar parts in the embodiments, reference may be made to these embodiments, and each embodiment focuses on a difference from other embodiments. The apparatus disclosed in the embodiment is related to the method disclosed in the embodiments, and is therefore outlined. For the associated part, reference may be made to the description in the method embodiments.

The foregoing description disclosed in the embodiments allows a person skilled in the art to implement or use the present invention. Various modifications to the embodiments are obvious to the person skilled in the art, and general principles defined in this specification may be implemented in other embodiments without departing from the spirit or scope of the present invention. Therefore, the present invention will not be limited to the embodiments described in this specification but extends to the widest scope that complies with the principles and novelty disclosed in this specification.

## Claims

1. A distributed database synchronization method, wherein a distributed database comprises a master server cluster and a backup server cluster, a master node in the master server cluster comprises one or more ranges, a backup node in the backup server cluster comprises one or more ranges, each range in the master server cluster corresponds to one range in the backup server cluster, the master server cluster comprises a first master node and a second master node, the backup server cluster comprises a first backup node and a second backup node, and the method comprises:
acquiring, by the first master node, range hash values of root nodes of all range hash trees of each master node in the master server cluster, and generating a hash tree of the master server cluster that uses the range hash values in the master server cluster as leaf nodes, wherein the range hash tree of the master node is a hash tree that is constructed by the master node by using a data unit in a range as a leaf node;
acquiring, by the first backup node, range hash values of root nodes of all range hash trees of each backup node in the backup server cluster, and generating a hash tree of the backup server cluster that uses the range hash values in the backup server cluster as leaf nodes, wherein the range hash tree of the backup node is a hash tree that is constructed by the backup node by using a data unit in a range as a leaf node;
determining, by the first master node by comparing the hash tree of the master server cluster with the hash tree of the backup server cluster, a range hash tree of the second master node and a range hash tree of the second backup node that have inconsistent range hash values;
determining, by the second master node by comparing the range hash tree of the second master node with the range hash tree of the second backup node, a data unit to be synchronized in the second master node and a data unit to be synchronized in the second backup node; and
performing, by the second master node, data synchronization according to the data unit to be synchronized in the second master node and the data unit to be synchronized in the second backup node.

2. The distributed database synchronization method according to claim 1, wherein the hash tree that is constructed by using a data unit in a range as a leaf node specifically comprises:
constructing, according to data unit information and range information, a tree structure that uses a data unit as a leaf node for each range;
calculating a hash value of each leaf node of the tree structure according to a hash model, to generate the range hash tree; and
adding a corresponding range identifier to each range hash tree.

3. The distributed database synchronization system according to claim 2, wherein each range in the master server cluster corresponding to a range in a backup server specifically comprises;
separately setting a range identifier for each range in the master server cluster and each range in the backup server; and
associating the range identifier of each range in the master server cluster with the range identifier of a corresponding range in the backup server.

4. The distributed database synchronization system according to claim 3, wherein
the first master node is elected from multiple master nodes; and the first backup node is elected from multiple backup nodes.

5. A distributed database synchronization system, wherein the distributed database synchronization system comprises a master server cluster and a backup server cluster, a master node in the master server cluster comprises one or more ranges, a backup node in the backup server cluster comprises one or more ranges, each range in the master server cluster corresponds to one range in the backup server cluster, the master server cluster comprises a first master node and a second master node, and the backup server cluster comprises a first backup node and a second backup node, wherein:
the first master node comprises a master server cluster hash tree generating unit, configured to acquire range hash values of root nodes of all range hash trees of each master node in the master server cluster, and generate a hash tree of the master server cluster that uses the range hash values in the master server cluster as leaf nodes, wherein the range hash tree of the master node is a hash tree that is constructed by the master node by using a data unit in a range as a leaf node;
the first backup node comprises a backup server cluster hash tree generating unit, configured to acquire range hash values of root nodes of all range hash trees of each backup node in the backup server cluster, and generate a hash tree of the backup server cluster that uses the range hash values in the backup server cluster as leaf nodes, wherein the range hash tree of the backup node is a hash tree that is constructed by the backup node by using a data unit in a range as a leaf node;
the first master node comprises a range determining unit, configured to determine, by comparing the hash tree of the master server cluster with the hash tree of the backup server cluster, a range hash tree of the second master node and a range hash tree of the second backup node that have inconsistent range hash values;
the second master node comprises a data determining unit, configured to determine, by comparing the range hash tree of the second master node with the range hash tree of the second backup node, a data unit to be synchronized in the second master node and a data unit to be synchronized in the second backup node; and
the second master node comprises a synchronization unit, configured to perform data synchronization according to the data unit to be synchronized in the second master node and the data unit to be synchronized in the second backup node.

6. The distributed database synchronization system according to claim 5, wherein the master server cluster hash tree generating unit and the backup server cluster hash tree generating unit both comprise a range hash tree generating module, wherein the range hash tree generating module comprises:
a tree generator, configured to construct, according to data unit information of a data management unit and range information of a range management unit, a tree structure that uses a data unit as a leaf node for each range;
a hash value generator, configured to calculate a hash value of each leaf node of the tree structure according to a hash model, to generate the range hash tree; and
a range identification unit, configured to add a range identifier to each range hash tree.

7. The distributed database synchronization system according to claim 6, wherein the master server cluster and the backup server cluster both comprise:
an election unit, configured to determine the first master node from the multiple master nodes, or determine the first backup node from the multiple backup nodes.
